# EUROPEAN PATENT APPLICATION

(11) **EP 4 725 310 A1**
(43) Date of publication of application: **15.04.2026**
(21) Application number: 25206860.6
(22) Date of filing: 06.10.2025
(51) Int. Cl.: A01M 7/00, A01C 21/00

(54) **SYSTEM AND METHOD FOR OPTIMIZING PRODUCT APPLICATION IN A FIELD**

(30) Priority: 10.10.2024 US 202463705890 P
(71) Applicant: AGCO International GmbH, 8212 Neuhausen am Rheinfall (CH)
(72) Inventor: BECH, Søren, 8900 Randers (DK); LAUSDAHL, Kenneth, 8900 Randers (DK); NILSSON, Rene, 8900 Randers (DK); LUND, Jens, 8900 Randers (DK); ZHOU, Kun, 8900 Randers (DK)
(74) Representative: AGCO Intellectual Property Department

(57) **Abstract**

A computing system is configured to use path information, application rate information and product amount information to determine an application plan for applying product to a field using an application vehicle, the application plan including an application zone for applying the product in the field. The computing system further generates a signal for controlling a user interface to present the application plan, for controlling the vehicle to apply the product in the field according to the application plan, or both. The application plan includes two or more application paths within the application zone and at least one skipped path within the application zone, and includes at least one variation in application rate along the application paths according to the application rate information, such that when the vehicle applies the product to the field following the application plan, the vehicle applies one complete tank of product in the application zone.

## Description

### RELATED APPLICATIONS

N/A

### FIELD

Embodiments of the present invention relate to systems and methods for applying products to fields. More particularly, embodiments of the present invention relate to managing application operations to enhance efficiency.

### BACKGROUND

It is common in the agriculture industry to apply products to fields at various times during a crop cycle. A farmer may apply a product such as fertilizer, herbicide or pesticide to a field at any time in the crop cycle including before a crop is planted, between planting and harvest or after the crop is harvested.

Product application operations involve the use of an application vehicle such as a fertilizer spreader, a slurry spreader or a sprayer that includes a product tank for storying product on the vehicle and a delivery system for applying the product from the product tank to vegetation (crops or weeds), to the ground surface, or both. Application vehicles apply product to a field by travelling back and forth across the field to apply swaths of product and apply the swaths progressively from one side of a field to another. The application vehicles apply the product at a target application rate to get the correct amount of product on the field. In addition to the application vehicle another vehicle, such as a truck and trailer combination, accompanies the application vehicle and stores additional product to be applied to refill the application vehicle when it has exhausted the supply of product in the product tank.

One of the challenges of applying product to a field is that the application vehicle may run out of product while it is near the middle of the field rather than near an edge of the field. Ideally, the application vehicle runs out of product at the edge of the field so that it can refill at the second vehicle without needing to drive the same application path twice to cover portions of the path missed in a previous run. To avoid running out of product in the middle of the field an operator of the application vehicle may greatly reduce the amount of product being applied for at least a portion of the application path below the target application rate such that the product is less effective. It will be appreciated that applying product at less than a target rate negatively impacts crop production.

The above section provides background information related to the present disclosure which is not necessarily prior art.

### SUMMARY

A system in accordance with embodiments of the invention comprises an application vehicle including a plurality of ground engaging elements for supporting the vehicle on a ground surface and moving the vehicle along the ground surface, a product tank for holding product and a product delivery system for applying the product from the product tank to an area in the vicinity of the vehicle.

The system further comprises a computing system for using path information, application rate information and product amount information to determine an application plan for applying the product to a field, the application plan including an application zone for applying the product in the field, and generating a signal for controlling a user interface to present the application plan, for controlling the vehicle to apply the product in the field according to the application plan, or both.

The application plan includes two or more application paths within the application zone and at least one skipped path within the application zone, and includes at least one variation in application rate along the application paths according to the application rate information, such that when the vehicle applies the product to the field following the application plan, the vehicle applies one complete tank of product in the application zone.

In some embodiments the computing system is configured to determine the path plan while the vehicle is applying the product in the field, and in some embodiments the computing system is configured to repeatedly determine path plans while the vehicle is applying the product in the field such that as the vehicle is applying the product according to a first path plan with a first application zone the computing system determines a second path plan with a second application zone.

In some embodiments, the computing system is configured to use the path information, the application rate information and the product amount information to determine a second application zone for applying the product in the field, wherein the second application zone includes two or more application paths within the second application zone such that when the vehicle applies the product to the field at the application rate in the second application zone the vehicle applies one complete tank of product in the second application zone. At least one of the two or more application paths within the second application zone corresponds to the at least one skipped path of the first application zone.

In some embodiments, the application rate information includes a target application rate, a minimum application rate and a maximum application rate, and the computing system is configured to determine the application plan by setting an application rate for the application paths as the target application rate and varying the application rate within the minimum and maximum rates for at least one of the paths so that the vehicle applies one complete tank of product in the application zone.

In some embodiments, the signal for controlling the vehicle to apply the product in the field controls the product delivery system to begin applying the product from the tank, to stop applying product from the tank, and to apply the product according to the application rate information while applying the product. In some embodiments, the signal for controlling the vehicle to apply the product in the field controls the propulsion, the steering, or both of the vehicle along the application paths.

In some embodiments, the product amount information includes a volume of the product tank, and in some embodiments the product amount information includes the weight and density of the product in the product tank.

In some embodiments the computing system is configured to use a maximum number of paths to determine the application plan and to determine the application plan such that the total number of application paths and skipped paths in the application zone does not exceed the maximum number of paths.

In some embodiments the computing system is configured to determine the cost of splitting an application path, determine the cost of skipping one or more paths, and, if the cost of skipping the one or more paths is greater than the cost of splitting an application path, use a split application path rather than skipped application paths to define an application zone. In some embodiments the computing system is configured to use field boundary information and application width information to generate the path information.

This summary is provided to introduce a selection of concepts in a simplified form that are further described in the detailed description below. This summary is not intended to identify key features or essential features of the claimed subject matter, nor is it intended to be used to limit the scope of the claimed subject matter. Other aspects and advantages of the present invention will be apparent from the following detailed description of the embodiments and the accompanying drawing figures.

### DRAWINGS

Embodiments of the present invention are described in detail below with reference to the attached drawing figures, wherein:
Fig. 1 is an application vehicle constructed in accordance with embodiments of the invention.
Fig. 2 is a block diagram of certain components of an electronic system of the application vehicle of FIG. 1.
Fig. 3 is a block diagram of a computing system in accordance with embodiments of the invention.
Fig. 4 is a diagram of a field and a plurality of application paths within the field.

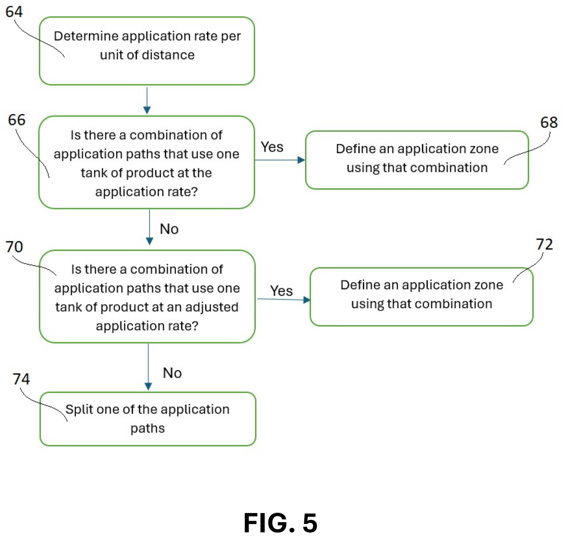

Fig. 5 is a flow diagram of certain steps involved in a method of determining an application plan.
Fig. 6 illustrates an application zone defined in the field of FIG. 4.
Fig. 7 illustrates an application zone defined in the field of FIG. 4.
Fig. 8 is a graphical representation of field boundaries that may be used to determine an application plan.

The drawing figures do not limit the present invention to the specific embodiments disclosed and described herein. The drawings are not necessarily to scale, emphasis instead being placed upon clearly illustrating the principles of the invention.

### DESCRIPTION

The following detailed description of embodiments of the invention references the accompanying drawings. The embodiments are intended to describe aspects of the invention in sufficient detail to enable those skilled in the art to practice the invention. Other embodiments can be utilized and changes can be made without departing from the spirit and scope of the invention as defined by the claims. The following description is, therefore, not to be taken in a limiting sense. Further, it will be appreciated that the claims are not necessarily limited to the particular embodiments set out in this description.

In this description, references to "one embodiment", "an embodiment", or "embodiments" mean that the feature or features being referred to are included in at least one embodiment of the technology. Separate references to "one embodiment", "an embodiment", or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments, but is not necessarily included. Thus, the present technology can include a variety of combinations and/or integrations of the embodiments described herein.

When elements or components are referred to herein as being "connected" or "coupled," the elements or components may be directly connected or coupled together or one or more intervening elements or components may also be present. In contrast, when elements or components are referred to as being "directly connected" or "directly coupled," there are no intervening elements or components present.

As explained above, applying product to a field presents the challenge of the application vehicle running out of product while in the middle of a field such that the operator must either reduce the rate at which product is applied, contrary to the target application rate for the field, or stop the application process in the middle of the field to refill the application vehicle. Embodiments of the present invention provide a system that solves these problems. In particular, embodiments of the invention relate to a system for determining a path plan wherein an application vehicle applies product to a field such that the product carried by the application vehicle is exhausted at the end of an application path rather than in the middle of the field without reducing the application rate beyond an acceptable variation limit.

According to embodiments of the invention, a system comprises an application vehicle including a plurality of ground engaging elements for supporting the vehicle on a ground surface and moving the vehicle along the ground surface, a product tank for holding product and a product delivery system for applying the product from the product tank to an area in the vicinity of the vehicle. The system further comprises a computing system for using path information, application rate information and product amount information to determine an application plan for applying the product to a field, the application plan including an application zone for applying the product in the field. The computing system further generates a signal for controlling a user interface to present the application plan, controls the vehicle to apply the product in the field according to the application plan, or both. The application plan includes two or more application paths within the application zone and at least one skipped path within the application zone, and includes at least one variation in application rate along the application paths according to the application rate information, such that when the vehicle applies the product to the field following the application plan, the vehicle applies one complete tank of product in the application zone. As used herein, applying one complete tank of product means applying the product beginning when the tank is at or above 90% full and ending at or below 10% full.

Thus, embodiments of the present invention address the problems associated with product application set forth above by determining an application plan that includes a combination of application paths and skipped paths within an application zone such that the application vehicle empties the product tank at the end of an application path.

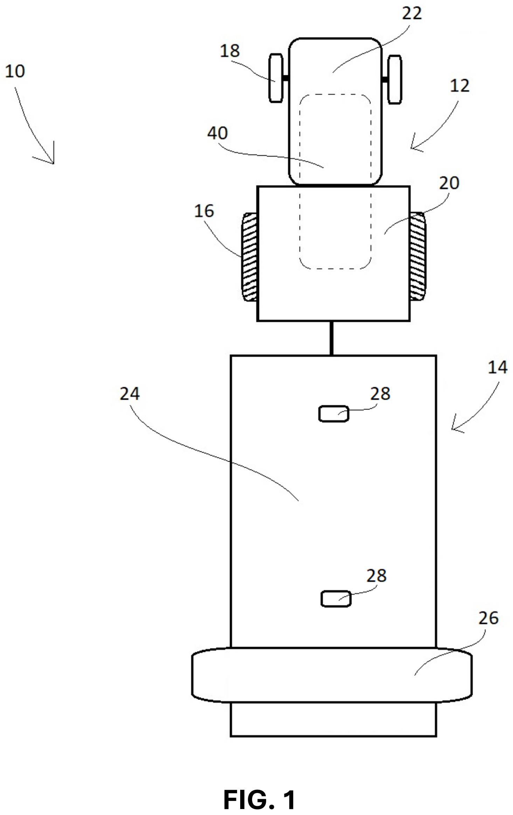

Turning now to the drawing figures, and initially FIG. 1, an application vehicle 10 according to embodiments of the invention is illustrated. The vehicle 10 includes a tractor 12 coupled with an implement 14 for carrying the product and applying the product to the field. The tractor 12 includes wheels 16, 18 for supporting the tractor 12 on a ground surface and moving the tractor 12 along the ground surface. The wheels include rear wheels 16 and steerable front wheels 18. The implement 14 also includes wheels that are not shown in FIG. 1. It will be appreciated that the tractor 12, the implement 14 or both may include ground engaging elements other than wheels, such as tracks. The tractor 12 further includes an operator cabin 20; a power source 22, such as an engine or battery, for providing power and/or propulsion to the tractor 10 and the implement 14; and an electronic system 40. The tractor 12 may be manually operated by a user, may be fully automated or may be manually operator with some automated operator assistance as discussed below.

The implement 14 includes a product tank 24 and a product delivery system 26 for applying the product from the product tank 24 to an area in the vicinity of the vehicle 10. In some embodiments, the implement 14 includes one or more product sensors 28 for sensing characteristics of the product in the product tank 24, such as a volume or weight of the product. The tractor 10 pulls the implement 14 along an application path through a field and drives activation of the product delivery system 26 to apply the product to the field. The application width is the width of the pattern of product dispersed by the product delivery system 26. By way of example and not limitation, the application width may be ten meters, fifteen meters, twenty meters, twenty-five meters, thirty meters or even larger. In the embodiment illustrated in FIG. 1 and discussed herein the implement 14 is a slurry applicator pulled and activated by the tractor 10. The invention is not so limited, however, and various types of application vehicle are within the scope of the claimed invention. By way of example and not limitation, the implement 14 may be a fertilizer spreader pulled by a tractor, a sprayer pulled by a tractor, or a self-propelled slurry applicator, fertilizer spreader or sprayer.

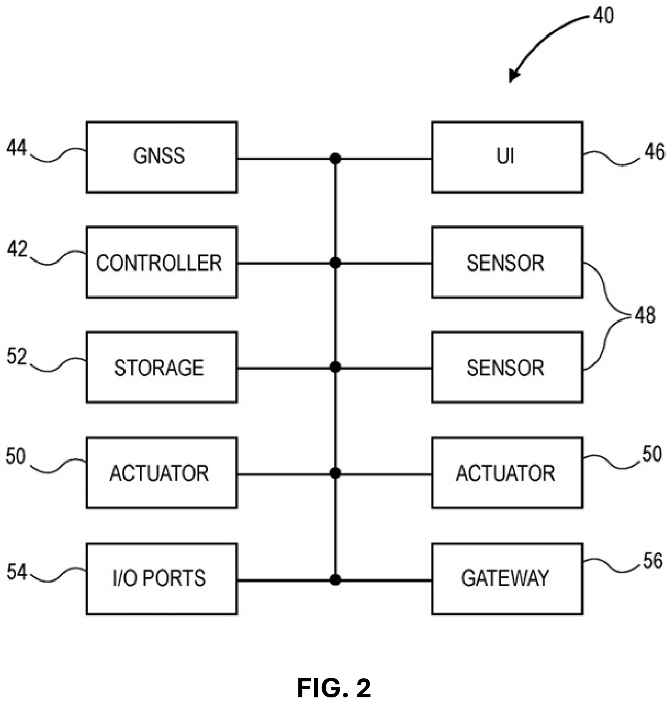

The electronic system 40 of the application vehicle 10 is illustrated in greater detail in FIG. 2. The system 40 broadly includes a controller 42, a position determining device 44, a user interface 46, one or more sensors 48, one or more actuators 50, one or more storage components 52, one or more input/out ports 54 and a communications gateway 56.

The position determining device 44 includes a global navigation satellite system (GNSS) receiver, such as a device configured to receive signals from one or more positioning systems such as the United States' global positioning system (GPS), the European GALILEO system, the Chinese BeiDou system and/or the Russian GLONASS system, and to determine a location of the machine using the received signals. Alternatively or additionally, the position determining device 44 may use light detection and ranging (LiDAR) technology, radio detecting and ranging (RADAR) technology, one or more cameras, or a combination thereof to determine position. The position determining device 44 may also include an inertial measurement device to assist in determining the location of the machine. The user interface 46 includes components for receiving information, instructions or other input from a user and may include buttons, switches, dials, and microphones, as well as components for presenting information or data to users, such as displays, light-emitting diodes, audio speakers and so forth. The user interface 46 may include one or more touchscreen displays capable of presenting visual representations of information or data and receiving instructions or input from the user via a single display surface.

The sensors 48 may be associated with any of various components or functions of the application vehicle 10 including, for example, various elements of the engine, transmission(s), product tank 24, product delivery system 26 and hydraulic and electrical systems. One or more of the sensors 48 may be configured and placed to detect environmental or ambient conditions in, around or near the application vehicle 10. Such environmental or ambient conditions may include temperature, humidity, wind speed and wind direction. The product sensors 28 may be one of the sensors 48 or may be connected to the system 40 via the input/output ports 54 or via the communication gateway 56. The actuators 50 are configured and placed to drive certain functions of the application vehicle 10 including, for example, the product delivery system 26. The actuators 50 may take virtually any form but are generally configured to receive control signals or instructions from the controller 42 (or other component of the system 40) and to generate a mechanical movement or action in response to the control signals or instructions. By way of example, the sensors 48 and actuators 50 may be used in automated guidance of the application vehicle 10 wherein the sensors 48 detect a current position or state of steered wheels and the actuators 50 drive steering action of the wheels and control operation of an engine and/or transmission of the application vehicle 10.

The controller 42 is a computing device or a computing system and includes one or more integrated circuits programmed or configured to implement the functions described herein and associated with the application vehicle 10. By way of example the controller 42 may be a digital controller and may include one or more general purpose microprocessors or microcontrollers, programmable logic devices, application specific integrated circuits or other computing or logic devices. The controller 42 may include multiple computing components, such as electronic control units, placed in various locations on the application vehicle 10, and may include one or more computing devices connected to the system 40 through the I/O ports 54. The controller 42 may also include one or more discrete and/or analog circuit components operating in conjunction with the one or more integrated circuits or computing components. Furthermore, the controller 42 may include or have access to one or more memory elements operable to store executable instructions, data, or both. The storage component 52 stores data and preferably includes a non-volatile storage medium such as solid state, optic or magnetic technology.

The communications gateway 56 includes one or more wireless transceivers configured to communicate with external machines or devices using wireless communications technology. The communications gateway 56 may include one or more wireless transceivers configured to communicate according to one or more wireless communications protocols or standards, such as one or more protocols based on the IEEE 802.11 family of standards ("Wi-Fi"), the Bluetooth wireless communications standard, a 433 MHz wireless communications protocol or a protocol for communicating over a cellular telephone network. Alternatively or additionally, the communications gateway 56 may include one or more wireless transceivers configured to communicate according to one or more proprietary or non-standardized wireless communication technologies or protocols, such as proprietary wireless communications protocols using 2.4 GHz or 5 GHz radio signals. Thus, the communications gateway 56 enables wireless communications with other mobile machines, with external devices such as laptop or tablet computers or smartphones, and with external communications networks such as a cellular telephone network or Wi-Fi network.

It will be appreciated that, for simplicity, certain elements and components of the system 40 have been omitted from the present discussion and from the diagram illustrated in FIG. 2. One or more power sources and/or power connectors are also associated with the system 40, for example, but are conventional in nature and, therefore, is not discussed herein.

In FIG. 1 the system 40 is illustrated on the tractor 12 with the understanding that components of the system 40 may be external to the application vehicle 10. In some embodiments, for example, some of the components of the system 40 are contained on or in the tractor 12 while other components are contained on or in the implement 14. In that embodiment, the components associated with the tractor 10 and the components associated with the implement 14 or other attachment may communicate via wired or wireless communications according to a local area network such as, for example, a controller area network. The system may be part of a communications and control system conforming to the ISO 11783 (also referred to as "ISOBUS") standard. In yet another embodiment, one or more components of the system 40 may be located separately or remotely from the application vehicle 10. In that embodiment, the system 40 may include wireless communications components (e.g., the gateway 56) for enabling the application vehicle 10 to communicate with another machine or a remote computer, computer network or system. It may be desirable, for example, to use one or more computing devices external to the application vehicle 10 to determine, or assist in determining, an application plan, as explained below.

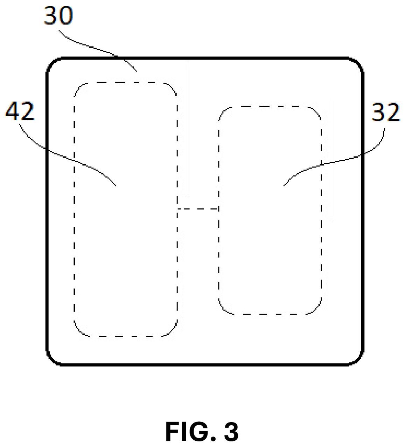

Embodiments of the present invention involve the use of a computing system to perform various functions described herein. Certain components of an exemplary computing system 30 is illustrated in FIG. 3 including the controller 42 as part of the electronic system 40 as well as an external computer 32 in communication with the controller 42 via the communications gateway 56, the input/output ports 54, or both. The external computer 32 may be a remote computer, such as a server that is part of a cloud computing system or a remote laptop or desktop computer. The external computer 32 may also be a portable device such as a laptop computer, tablet computer or smartphone on or near the application vehicle 10. The computing system includes one or more computer-readable media, such as a magnetic or solid-state data storage device, that store computer usable instruction that are executed by one or more computing devices such as the controller 42 or the external computer 32. The computer useable instructions enable the one or more computing devices to perform functions described herein, such as determining an application plan as described below.

By way of example, the external computer 32 may determine an application plan, as explained below, and communicate the plan to the controller 42, wherein the controller 42 presents information about the application plan via the user interface 46, controls certain functions of the application vehicle 10 to execute the application plan, or both. In some embodiments of the invention the computing system 30 includes only components of the electronic system 40, such as the controller 42 and the storage component 52, wherein the computing system 30 is housed entirely on the application vehicle 10. In other embodiments of the invention the computing system 30 includes multiple external computers. All of these embodiments are within the ambit of the invention as set forth in the claims.

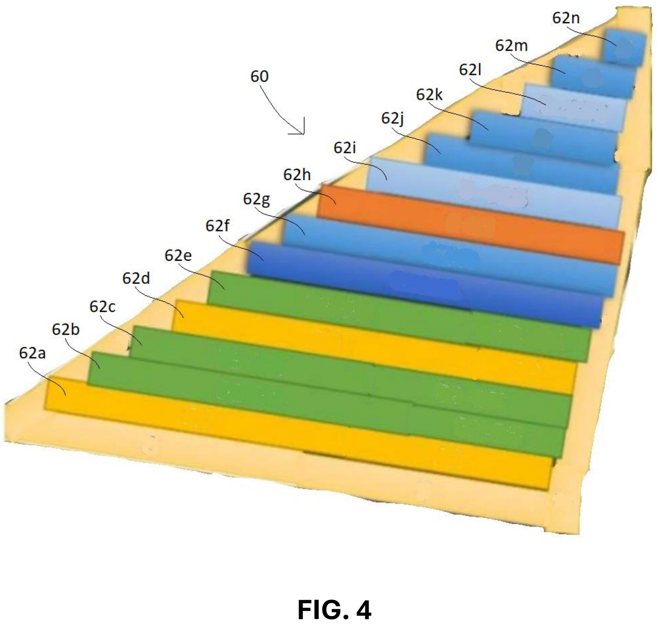

The computing system 30 uses path information, application rate information and product amount information to determine an application plan for applying the product to a field, the application plan including an application zone for applying the product in the field. The path information defines the application paths followed by the application vehicle 10 to apply the product to the field and may include a series of waylines, wherein each wayline corresponds to an application path and is used by the electronic system 40 of the application vehicle 10 to automatically guide the vehicle 10 along the application path. An exemplary field 60 is illustrated in FIG. 4 with a series of application paths 62a-62n defined by path information. The path information may correspond to previously used paths that a farmer desires to reuse, therefore the path information may be communicated to the computing system 30 from an external source, such as the external computer 32, via the communications gateway 56 or input/output ports 54. Alternatively, the path information may be submitted to the computing system 30 by a user via the user interface 46 or the input/output ports 54, such as where the user manually defines the application paths via a touchscreen or downloads the path information from an external data storage device.

The application rate information includes a target application rate as well as an allowed deviation from the target application rate. The target application rate includes an amount of product to be applied per unit of area, such as a volume or weight of product to be applied per hectare or square meter of land in the field 60 and the allowed deviation from the target application rate may be a minimum and maximum application rate, wherein the minimum application rate is less than the target application rate and the maximum application rate is greater than the target application rate. The allowed deviation may also be a percentage of the target application rate. By way of example, the application rate of slurry may be 28,000 liters per hectare, 50,000 liters per hectare or 100,000 liters per hectare, depending on the type of slurry. If the target application rate is 100,000 liters per hectare, the allowed deviation may include a minimum of 95,000 liters per hectare and a maximum of 105,000 liters per hectare.

The application rate information may be generated by the external computer 32 and communicated to the computing system 30 via the communications gateway 56 or input/output ports 54. Alternatively, the application rate information may be submitted to the computing system by a user via the user interface 46 or the input/output ports 54, such as where the user manually defines the application rate information via a touchscreen or downloads the application rate information from an external data storage device.

The product amount information includes an amount of product stored in the product tank 24. The product amount information may simply be the volume of the product tank 24 wherein the computing system 30 assumes the tank 24 is full at the beginning of each application. Alternatively, the product amount information may include both the volume of the product tank 24 as well as a fill level of the product tank 24, such as may be provided by the product sensors 28. In yet another embodiment, the product amount information may include the weight and density of the product. The weight may be determined by the product sensors 28 and the density may be provided by a user or determined by the computing system 30 as being associated with a particular product.

The computing system 30 determines the application plan using the path information, the application rate information and the product amount information. The computing system 30 determines an amount of application per unit of distance using the application rate information and the path information, as depicted in block 64, then uses the application per unit of distance and the path information to determine if there is a combination of application paths 62a-62n that would empty the product tank 24 without deviating from the target application rate, as depicted in block 66. If so, the computing system 30 uses that combination of application paths to define an application zone, as depicted in block 68. If there is not a combination of application paths 62a-62n that would empty the product tank 24 without deviating from the target application rate the computing system 30 determines whether there is a combination of application paths 62a-62n that would empty the product tank 24 at an adjusted application rate, as depicted in block 70, wherein the adjusted application rate is within the allowed deviation from the target application rate. If so, the computing system 30 uses that combination of application paths to define an application zone, as depicted in block 72. If there is not a combination of application paths 62a-62n that would empty the product tank 24 at an adjusted application rate the computing system 30 splits one of the application paths, as depicted in block 74. An application plan may include a single application zone or multiple application zones and, as discussed below, the computing system 30 may determine an application plan with multiple application zones in advance of the application vehicle beginning operations in the field or may determine application zones in real time as the application vehicle 10 performs work in the field.

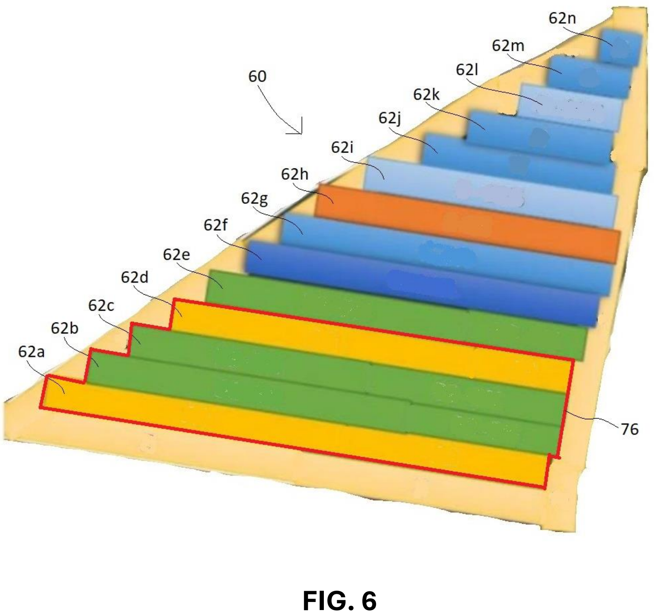

By way of example, if the application vehicle is a slurry spreader that holds 20,000 liters of slurry, the target application rate is 10,000 liters per hectare and the width of the application paths is 15 meters, the amount of application per ten meters of application path is 150 liters. An application path that is 800 meters long would require 12,000 liters of slurry or a little over one-half of the capacity of the product tank. With reference to FIG. 4, if the first path 62a is 800 meters the computing system 30 determines that the application vehicle 10 will use 12,000 liters of slurry to cover the entire length of the application path. The computing system 30 looks for an additional path that will use the remaining 8,000 liters without adjusting the target application rate. The second application path 62b and the third application path 62c would each require more than the remaining 8,000 liters which would mean that the application vehicle 10 would run out of slurry before reaching the end of either of those paths after applying slurry along the first path 62a. However, the computing system 30 determines that the fourth path 62d is the appropriate length to use the remaining 8,000 liters of slurry so the computing system 30 combines the first application path 62a and the fourth application path 62d into a first application zone 76, as illustrated in FIG. 6. The first application zone 76 includes two application paths 62a, 62d and two skipped paths 62b 62c. To apply slurry in the first application zone 76, the application vehicle 10 applies the slurry along either application path 62a or path 62d, then skips the paths 62b and 62c and applies to the other of path 62a or 62d. When the application vehicle 10 has applied slurry along the two paths 62a and 62d at the target application rate it will complete the paths with an empty product tank 24. The application vehicle 10 can then refill its product tank and begin applying the product along a new path.

The computing system 30 determines a second application zone using application paths where product has not been applied. The computing system 30 begins by determining the amount of slurry used when applying along the second application path 62b and then identifying one or more application paths that would use the remaining slurry, as explained above. This time the computing system 30 does not identify a combination of application paths that would use one tank of product so it identifies a combination of application paths that use one complete tank at an adjusted application rate within the allowed deviation from the target application rate.

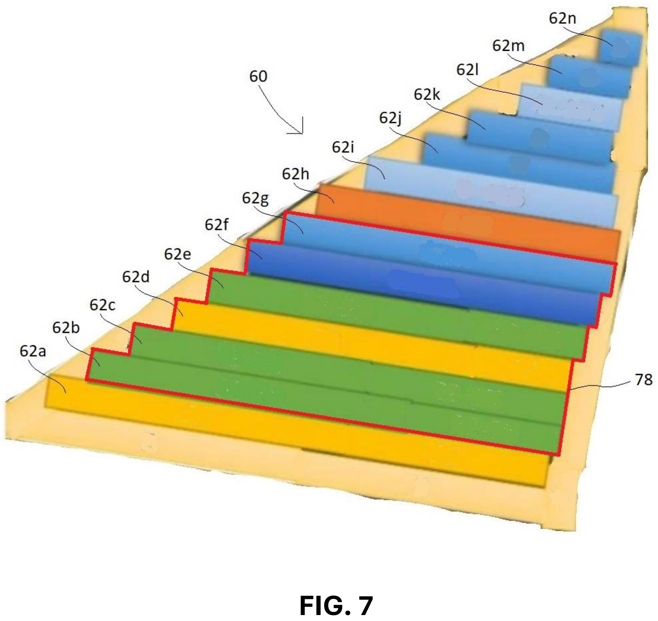

To identify an application zone with a combination of application paths that use one complete tank at an adjusted application rate, the computing system 30 identifies the combination of application paths that came closest to using one complete tank slurry and determines whether adjusting the application rate on at least a portion of one or more of the paths within the allowed deviation amount would result in one complete tank of product being used. In the example illustrated in FIG. 7, the computing system determines that the second 62b, fifth 62e and seventh 62g application paths come closest to emptying one full tank of product, but that the product tank 24 would run out of product thirty meters before completing all three application paths. The computing system 30 determines that adjusting the application rate along the fifth application path 62e to the minimum allowed deviation would allow the application vehicle 10 to apply one full tank of product along the three paths 62b, 62e and 62g. The computing system 30 defines a second application zone 78 that includes the three paths 62b, 62e and 62g along with skipped paths 62c, 62d and 62f. One of the application paths 62b of the second application zone 78 corresponds to one of the skipped paths of the first application zone 76.

While in this example the computing system 30 adjusted the application rate along the fifth application path 62e, the computing system 30 may have alternatively adjusted the application rate along portions of each of the paths 62b, 62e, and 62 g or along just a portion of path 62b.

When the computing system 30 has defined an application plan it generates a signal for controlling a user interface to present the application plan, for controlling the vehicle 10 to apply the product in the field according to the application plan, or both. The computing system 30 may generate a signal to control the user interface 46 to show, for example, the maps illustrated in FIGs. 6 and 7 so that an operator of the application vehicle 10 knows in which order to follow the application paths. Alternatively or additionally the computing system 30 may control, at least in part, the application vehicle 10 to apply the product in the field. The computing system 30 may control the product delivery system 26 to begin applying the product when the application vehicle 10 begins an application path, to stop applying product when the application vehicle 10 has reached the end of an application path, and to apply the product at the rate determined by the computing system 30 (either the target rate or a rate corresponding to an allowable deviation of the target rate) while the operator drives the application vehicle 10 along the application paths designated in each application zone. Furthermore, the application vehicle 10 may be fully automated wherein the computing system 30 controls the entire vehicle 10 including propulsion, steering and the product delivery system 26 to apply the product to the field according the application plan.

The computing system may generate the application plan while the application vehicle 10 is operating in the field, may generate the application plan before the application vehicle 10 begins operating in the field or may use a combination of both. An operator may begin applying the product to the field along the first application path 62a, for example, and then engage the computing system 30 to begin determining an application plan for the field. The computing system 30 would then generate an application plan including the first application zone 76, the second application zone 78, and so forth. The computing system 30 may generate additional application zones of the application plan on a rolling basis as the application vehicle 10 progresses through the field, thereby adapting to changes introduced by the operator such as skipping an application path entirely. If the computing system 30 determines the application plan after the application vehicle 10 begins working the field, the computing system 30 may use the current application rate of the application vehicle 10 as the target application rate and may change the target application rate if the operator adjusts the actual application rate. If the computing system 30 changes the target application rate to match a change in the actual, current application rate made by the operator, the computing system 30 will also use the new application rate in the application plan.

The example illustrated in FIGs. 4, 6 and 7 includes a relatively small field 60 with fourteen application paths 62a-n. In practice some fields are significantly larger than this so the computing system 30 may employ a method of limiting the size of application zones. This is useful because any efficiencies that may be gained by combining application paths to use one complete tank of product may be lost if the application vehicle 10 must travel excessive distances between the application paths. One method of limiting the size of application zones is to use a look ahead limit on application paths when defining the application zones. The computing system 30 may implement a look ahead limit of ten paths, for example, such that it will consider no more than ten consecutive paths at a time when identifying an application zone. This will ensure that no application zone spans more than ten total consecutive paths, including application paths and skipped paths. If the computing system 30 cannot create an application zone within the look ahead limit it may split a path to create a relatively small application zone. The look ahead limit of ten paths is one example and other values may be used. For larger application widths a smaller look ahead limit may be advantageous while larger look ahead limits may be useful for smaller application widths because the distance between widths is less. The look ahead limit may be defined by the user.

Another method of limiting the size of application zones involves the computing system 30 using a maximum number of skipped paths and/or a maximum number of consecutive skipped paths such that if it cannot create an application zone as described above without exceeding the maximum it splits an application path. According to one example and with reference to FIG. 7, the computing system 30 attempts to create the second application zone 78 and determines that the only combination of application paths that could be used to apply one complete tank of product beginning with path 62b would include paths 62b, 62d and 62j such that the total number of skipped paths in the application zone is six and the total number of consecutive skipped paths is five. If the maximum number of skipped paths is five or the maximum number of consecutive skipped paths is four, the computing system 30 defines the next application zone as application path 62b, 62c and a portion of 62d, thus splitting path 62d. While splitting a path has efficiency costs, in this case it represents a better option than using a large number of skipped paths.

Another method of limiting the size of application zones involves the computing system 30 comparing the cost of splitting an application path with the cost of using skipped paths in an application to determine if the cost of skipping paths exceeds the cost of splitting a path. Using the previous example, the computing system 30 may determine that the cost of using an application zone 78 by splitting application path 62d is 800 meters of travel associated with returning to the path 62d and driving it a second time. As the computing system 30 attempts to create the application zone 78 by skipping paths, it determines the cost of skipping application paths and compares that cost with the cost of splitting a path (in this example, 800 meters of travel). If the computing system 30 determines that paths 62e-62i must be skipped to create an application zone wherein one full tank of product is used and the cost of skipping those paths is 1,000 meters of travel, it creates an application zone including a part of path 62d as that requires less travel and is therefore the more efficient option.

In the examples discussed above the costs associated with different application plans is discussed in terms of travel distance. It will be understood, though, that different methods of determining costs may be used including, without limitation, time required to complete an application plan.

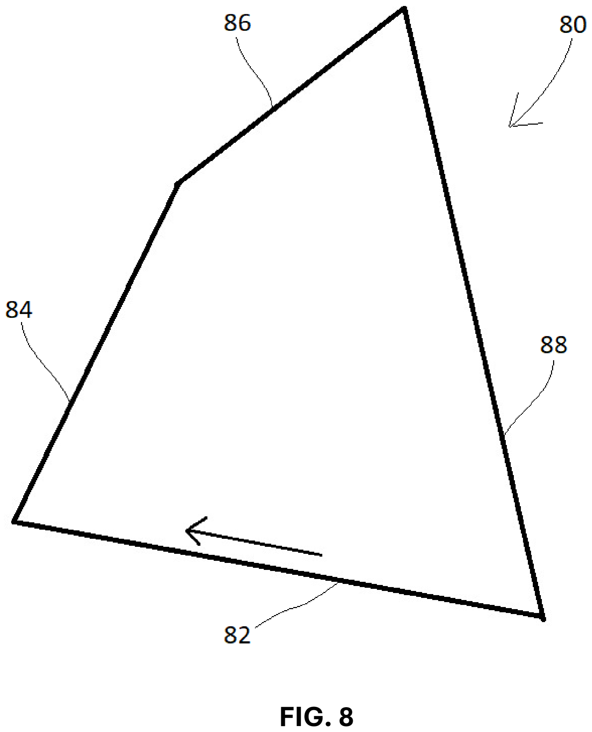

According to another embodiment of the invention, the computing system 30 uses field boundary information and application width information to determine the application plan. In this embodiment the computing system 30 determines the application plan in a manner similar to the embodiment described above except that the computing system 30 defines the application rows, at least in part, using the field boundary information and the application width information. With reference to FIG. 8, an exemplary field boundary 80 is provided. The computing system 30 uses the field boundary 80 to determine the application rows. If the application vehicle operator begins applying product to the field along the bottom boundary 82 in the direction of the arrow, the computing system 30 may determine the orientation of the application paths as being parallel with the bottom boundary 82 and may determine the application width based on the distance between the boundary 82 and the application vehicle 10 as the application vehicle 10 travels along the first application path. With that application path information the computing system 30 can determine the path plan according to the method set forth above.

The computing system 30 may determine a path plan using field boundary information by selecting an orientation for the paths, such as before the application vehicle 10 begins operating in the field. The computing system 30 may orient the application paths to be parallel with a randomly selected field boundary or with the longest field boundary. Alternatively, the computing system 30 may select an application path orientation that is most efficient. The computing system 30 may select an orientation that is most efficient by determining path plans for different application path orientations. For example, the computing system 30 may determine a path plan for application paths that are parallel with the bottom boundary 82 and determine the minimum number of split paths, the number of skipped paths, the amount of deviation from the target application rate, or a combination thereof according to that application plan. The computing system 30 may then do the same thing for application plans oriented parallel with each of the other boundaries 84, 86 and 88. If one orientation presents the least number of split application paths, least number of skipped paths and/or the least amount of deviation from the target application rate the computing system may select that orientation for the path plan.

Although the invention has been described with reference to the preferred embodiment illustrated in the attached drawing figures, it is noted that equivalents may be employed and substitutions made herein without departing from the scope of the invention as recited in the claims.

The claims at the end of this patent application are not intended to be construed under 35 U.S.C. § 112(f) unless traditional means-plus-function language is expressly recited, such as "means for" or "step for" language being explicitly recited in the claim(s).

Having thus described the preferred embodiment of the invention, what is claimed as new and desired to be protected by Letters Patent includes the following:

## Claims

1. A system comprising:
an application vehicle including -
a plurality of ground engaging elements for supporting the vehicle on a ground surface and moving the vehicle along the ground surface,
a product tank for holding product, and
a product delivery system for applying the product from the product tank to an area in the vicinity of the vehicle; and
a computing system for -
using path information, application rate information and product amount information to determine an application plan for applying the product to a field, the application plan including an application zone for applying the product in the field, and
generating a signal for controlling a user interface to present the application plan, for controlling the vehicle to apply the product in the field according to the application plan, or both,
wherein the application plan includes two or more application paths within the application zone and at least one skipped path within the application zone, and includes at least one variation in application rate along the application paths according to the application rate information, such that when the vehicle applies the product to the field following the application plan, the vehicle applies one complete tank of product in the application zone.

2. The system of claim 1, the computing system configured to determine the path plan while the vehicle is applying the product in the field.

3. The system of claim 1 or claim 2, the computing system configured to repeatedly determine path plans while the vehicle is applying the product in the field such that as the vehicle is applying the product according to a first path plan with a first application zone the computing system determines a second path plan with a second application zone.

4. The system of any preceding claim, the computing system configured to -
use the path information, the application rate information and the product amount information to determine a second application zone for applying the product in the field,
wherein the second application zone includes two or more application paths within the second application zone such that when the vehicle applies the product to the field at the application rate in the second application zone the vehicle applies one complete tank of product in the second application zone, and
wherein at least one of the two or more application paths within the second application zone corresponds to the at least one skipped path of the first application zone.

5. The system of any preceding claim,
the application rate information including a target application rate, a minimum application rate and a maximum application rate,
the computing system further configured to determine the application plan by setting an application rate for the application paths as the target application rate and varying the application rate within the minimum and maximum rates for at least one of the paths so that the vehicle applies one complete tank of product in the application zone.

6. The system as set forth in any preceding claim, wherein the signal for controlling the vehicle to apply the product in the field controls the product delivery system to begin applying the product from the tank, to stop applying product from the tank, and to apply the product according to the application rate information while applying the product.

7. The system as set forth in any preceding claim, wherein the signal for controlling the vehicle to apply the product in the field controls the propulsion, the steering, or both of the vehicle along the application paths.

8. The system of any preceding claim, the product amount information including a volume of the product tank.

9. The system of any preceding claim, the product amount information including the weight and density of the product in the product tank.

10. The system of any preceding claim, the computing system configured to further use a maximum number of paths to determine the application plan, and to determine the application plan such that the total number of application paths and skipped paths in the application zone does not exceed the maximum number of paths.

11. The system of any preceding claim, the computing system configured to - determine the cost of splitting an application path,
determine the cost of skipping one or more paths, and
if the cost of skipping the one or more paths is greater than the cost of splitting an application path, use a split application path rather than skipped application paths to define an application zone.

12. The system of any preceding claim, the computing system configured to use field boundary information and application width information to generate the path information.

13. A method comprising:
using path information, application rate information and product amount information to determine, using a computing system, an application plan for applying a product to a field with an application vehicle, the vehicle including a product tank for holding product, the application plan including an application zone for applying the product in the field; and
generating, using a computing system, a signal for controlling a user interface to present the application plan, for controlling the application vehicle to apply the product in the field according to the application plan, or both;
wherein the application plan includes two or more application paths within the application zone and at least one skipped path within the application zone, and includes at least one variation in application rate along the application paths according to the application rate information, such that when the vehicle applies the product to the field following the application plan, the vehicle applies one complete tank of product in the application zone.

14. The method of claim 13, further comprising:
using the path information, the application rate information and the product amount information to determine, using the computing system, a second application plan for applying the product in the field, the second application plan including a second application zone for applying the product in the field according to the application rate information,
wherein the second application zone includes two or more application paths and at least one skipped path such that when the vehicle applies the product to the field at the application rate in the second application zone, the vehicle applies one complete tank of product in the second application zone, and
wherein at least one of the two or more application paths within the second application zone corresponds to the at least one skipped path of the first application zone.

15. The method of either claim 13 or claim 14,
the application rate information including a target application rate, a minimum application rate and a maximum application rate,
the step of determining the application plan includes setting an application rate for the application paths as the target application rate and varying the application rate within the minimum and maximum rates for at least one of the paths so that the vehicle applies one complete tank of product in the application zone.

16. The method as set forth in any of claims 13 through 15, further comprising -
determining the application zone such that the total number of application paths and skipped paths in the application zone does not exceed a maximum number of paths.
